(19)

Europäisches
Patentamt
European
Patent Office
Office européen
des brevets

(11) **EP 2 416 618 A1**

(12) **EUROPEAN PATENT APPLICATION**
published in accordance with Art. 153(4) EPC

(43) Date of publication:
**08.02.2012 Bulletin 2012/06**

(21) Application number: **09842622.4**

(22) Date of filing: **31.03.2009**

(51) Int Cl.:
***H04W 88/00*** (2009.01)       ***H04B 7/15*** (2006.01)

(86) International application number:
**PCT/JP2009/056676**

(87) International publication number:
**WO 2010/113267 (07.10.2010 Gazette 2010/40)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Fujitsu Limited
Kawasaki-shi, Kanagawa 211-8588 (JP)**

(72) Inventors:
• **YOKOYAMA, Hitoshi
Kawasaki-shi
Kanagawa 211-8588 (JP)**

• **ODE, Takayoshi
Kawasaki-shi
Kanagawa 211-8588 (JP)**

(74) Representative: **Stebbing, Timothy Charles
Haseltine Lake LLP
Lincoln House, 5th Floor
300 High Holborn
London WC1V 7JH (GB)**

(54) **RELAY STATION, BASE STATION, METHOD OF RELAYING, AND COMMUNICATION METHOD IN WIRELESS COMMUNICATION NETWORK**

(57)     A relay station according to one embodiment of the present invention includes an extracting unit configured to descramble radio signals transmitted from plural mobile stations and extract identification information of physical layers of the mobile stations; and a multiplexing unit configured to convert the identification information of the physical layers to identification information of MAC layers, which are data link layers, and form a protocol data unit which includes the identification information of the MAC layers in a header and includes service data units of the radio signals transmitted from the mobile stations.

FIG.2

## Description

TECHNICAL FIELD

The present invention is directed to a relay station, a base station, a relay method and a communication method used in a wireless communications network.

BACKGROUND ART

Mobile communications systems have a problem of a radio wave skip zone, such as a zone suffering severe propagation loss of radio waves due to building shielding and a zone distant from a base station. In order to solve this problem, standardization of relay stations is discussed in IEEEB02.16j, IEEE802.16m, LTE-Advanced and the like.

Various types of relay stations have been examined, which are divided into two broad types: Amplitude-and-Forward (AF) strategy which performs a relay while suppressing a delay by adding an amplitude amplifier; and Decode-and-Forward (DF) strategy which performs a relay after decoding data and performing a verification to correct an error.

One type of the DF strategy is a MAC relay system which restores MAC Service Data Units (SDUs) in a MAC layer which is a data link layer, newly forms a MAC Protocol Data Unit (PDU) in accordance with the size of a Transport Block (TB) at the time of relay, and accordingly changes a transmission scheme, coding and modulation.

In this MAC relay system, when MAC_SDUs are remapped to a MAC_PDU, an ID of each mobile station UE is added in the MAC layer in view of multiplexing of mobile stations UE and demultiplexing into each mobile station UE, thereby clarifying the UE management.

The relay station of the MAC relay system is capable of compiling a single MAC_PDU by combining MAC_SDUs of plural UEs at the time of MAC relay and allowing the base station and the relay station to have a step-by-step scheduling function, and has an advantage of achieving a coding gain since the code length becomes long.

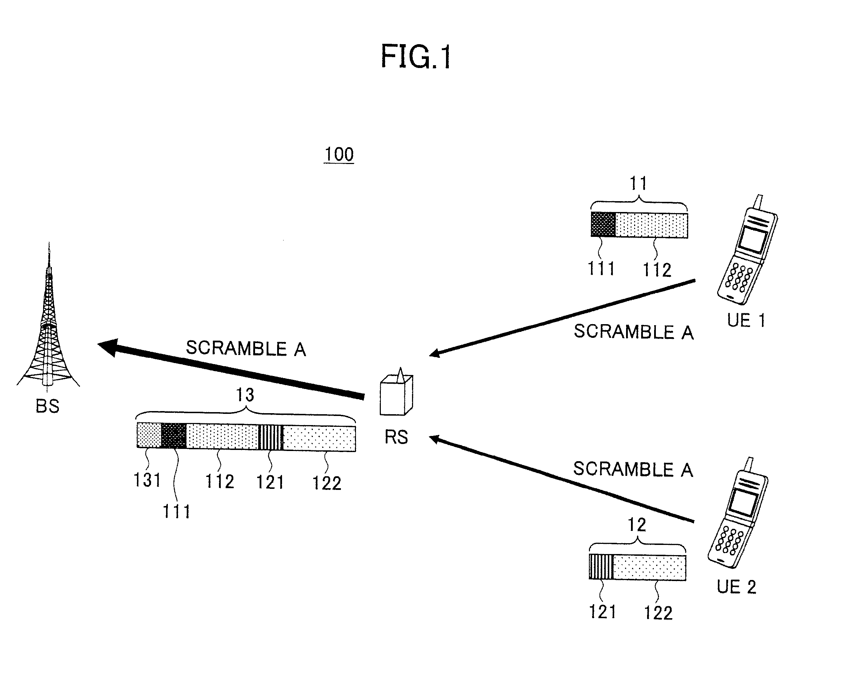

FIG. 1 is a schematic view illustrating a communications system 100, which is a conventional MAC relay system. The communications system 100 includes mobile stations UE1 and UE2, a relay station RS and a base station BS.

In a MAC layer, a MAC_PDU 11 which is transmitted by the mobile station UE1 to the relay station RS includes a MAC header 111 including identification information (UE_ID) of the mobile station UE1 and UE data 112. In a similar manner, a MAC_PDU 12 which is transmitted by the mobile station UE2 to the relay station RS includes a MAC header 121 including identification information (UE_ID) of the mobile station UE2 and UE data 122.

The relay station RS forms a MAC_PDU 13 by multiplexing the MAC_PDU 11 and MAC_PDU 12. The MAC_PDU 13 includes a MAC header 131 including identification information (Relay_ID) of the relay station RS, the MAC header 111 and the UE data 112 of the mobile station UE1, and the MAC header 121 and the UE data 122 of the mobile station UE2.

The MAC_PDUs 11, 12 and 13 are respectively transmitted using the same scramble code (SCRAMBLE A).

Thus, in the conventional communications system 100, the relay station RS includes the identification information of each mobile station UE in a single transport block TB and uses the identification information as a mark of a data unit. The data of each UE is identified by the corresponding identification information.

[Patent Document 1] Japanese Laid-open Patent Application Publication No. 2008-99283
[Patent Document 2] Japanese Laid-open Patent Application Publication No. 2008-104096

DISCLOSURE OF INVENTION

PROBLEM TO BE SOLVED BY INVENTION

According to the conventional communications system, adding information of the mobile station to the MAC header improves flexibility in control. However, along with the ID information 111 and 121 of the mobile stations UE, the ID information 131 of the relay station RS is also included in the control information. This increase in the control information results in a reduction in communication efficiency.

MEANS FOR SOLVING PROBLEM

One embodiment of the present invention is a relay station including an extracting unit configured to descramble radio signals transmitted from plural mobile stations and extract identification information of physical layers of the mobile stations; and a multiplexing unit configured to convert the identification information of the physical layers to identification information of MAC layers, which are data link layers, and form a protocol data unit which includes the identification information of the MAC layers in a header and includes service data units of the radio signals transmitted from the mobile stations.

Another embodiment of the present invention is a relay station including a separating unit configured to convert, to identification information of physical layers of a plurality of mobile stations, identification information of MAC layers included in radio signal transmitted from a base station, which radio signal includes the identification information of the MAC layers, which are data link layers, in a header of the radio signal and includes service data units of radio signals to the mobile stations, and separate a service data unit corresponding to each of the mobile stations.

One embodiment of the present invention is a relay method for relaying radio signals transmitted from plural mobile stations to a base station. The relay method includes extracting identification information of physical layers of the mobile stations from the radio signals; converting the identification information of the physical layers to identification information of MAC layers, which are data link layers; and forming a protocol data unit which includes the identification information of the MAC layers in a header and includes service data units of the radio signals transmitted from the mobile stations.

Yet another embodiment of the present invention is a relay method for relaying radio signal transmitted from a base station to plural mobile stations. The radio signal includes identification information of MAC layers, which are data link layers of the mobile stations, in a header of the radio signal and includes service data units of radio signals transmitted from the mobile stations. The relay method includes converting the identification information of the MAC layers to identification information of physical layers; and transmitting to each of the mobile stations, radio signal in which identification information of a physical layer for the mobile station is added to a service data unit corresponding to the mobile station.

EFFECT OF INVENTION

According to the present invention, it is possible to reduce control information and improve communication efficiency.

BRIEF DESCRIPTION OF DRAWINGS

FIG. 1 is a schematic view illustrating a communications system that is a conventional MAC relay system;
FIG. 2 is a schematic view illustrating a communications system according to one embodiment of the present invention;
FIG. 3 is a schematic view illustrating processes of a relay station according to the embodiment of the present invention;
FIG. 4 is a schematic view subsequent to FIG. 3, illustrating processes of the relay station according to the embodiment of the present invention;
FIG. 5 shows a format of a MAC_PDU after UE multiplexing;
FIG. 6 is a block diagram showing a structural example of a base station;
FIG. 7 is a block diagram showing a structural example of a relay station RS;
FIG. 8 is a block diagram showing a structural example of a mobile station UE;
FIG. 9 is a block diagram showing a structural example of a MAC_SDU separating unit of the relay station of the FIG. 7;
FIG. 10 is a block diagram showing a structural example of a MAC_SDU multiplexing unit of the relay station of FIG. 7;
FIG. 11 is a sequence diagram showing registration processing between the base station and the relay station at the time when the relay station RS starts up;
FIG. 12 is a block diagram showing a structure of the base station for signaling;
FIG. 13 is a block diagram showing a structure of the relay station for signaling;
FIG. 14 is a flow diagram showing the operations of the base station, the relay station and the mobile stations for downlink transmission;
FIG. 15 is a flow diagram showing the operations of the base station, the relay station and the mobile stations for uplink transmission;
FIG. 16 is a flow diagram showing separation of mobile stations and ID replacement in a MAC layer during the downlink transmission;
FIG. 17 is a flow diagram showing multiplexing of mobile stations and ID replacement in the MAC layer during the uplink transmission;
FIG. 18 is a block diagram showing a structure of a base station-based scheduler;
FIG. 19 illustrates a constraint condition of throughput according to the base station-based scheduler structure shown in FIG. 18;
FIG. 20 shows a protocol structure in the case when the base station-based scheduler is used;
FIG. 21 shows a protocol structure in the case when a relay station distributed scheduler is used; and
FIG. 22 is a block diagram showing a structural example of the relay station in the case where the relay station-distributed scheduler is used.

EXPLANATION OF REFERENCE NUMERALS

| | |
|---|---|
| BS | base station |
| RS | relay station |
| UE, UE1-n | mobile station |
| 601, 616 | L2 buffer |
| 602 | DL scheduler control signal generating unit |
| 603 | MAC_PDU generating unit |
| 604 | coding unit |
| 605 | relay PHY_ID scrambling unit |
| 606 | modulating unit |
| 607 | multiplexing unit |
| 608 | RF transmitting unit |
| 609 | duplexer (DUP) |
| 610 | antenna |
| 611 | RF receiving unit |
| 612 | demodulating unit |
| 613 | relay PHY_ID descrambling unit |
| 614 | decoding unit |
| 615 | MAC_SDU extracting unit |
| 701, 717 | antenna |
| 702, 716 | duplexer (DUP) |

| 703, 718 | RF receiving unit |
| 704, 719 | separating unit |
| 705 | DL scheduler control signal extracting unit |
| 706 | UL scheduler control signal extracting unit |
| 707, 720 | demodulating unit |
| 708 | RS_PHY_ID descrambling unit |
| 709, 722 | decoding unit |
| 710 | MAC_SDU separating unit |
| 711, 724 | coding unit |
| 712 | UE_PHY_ID scrambling unit |
| 713, 726 | modulating unit |
| 714 | multiplexing unit |
| 715, 727 | RF transmitting unit |
| 721 | UE_PHY_ID descrambling unit |
| 723 | MAC_PDU multiplexing unit |
| 725 | RS_PHY_ID scrambling unit |
| 801 | antenna |
| 802 | duplexer (DUP) |
| 803 | RF receiving unit |
| 804 | separating unit |
| 805 | DL scheduler control signal extracting unit |
| 806 | UL scheduler control signal extracting unit |
| 807 | demodulating unit |
| 808 | UE_PHY_ID descrambling unit |
| 809 | decoding unit |
| 810 | MAC_SDU extracting unit |
| 811 | MAC_PDU generating unit |
| 812 | coding unit |
| 813 | UE_PHY_ID scrambling unit |
| 814 | modulating unit |
| 815 | RF transmitting unit |
| 901 | MAC header analyzing unit |
| 902 | UE_ID extracting unit |
| 903 | ID converting unit |
| 904 | conversion table |
| 1001 | ID converting unit |
| 1002 | conversion table |
| 1003 | MAC_PDU generating unit |

BEST MODE FOR CARRYING OUT INVENTION

An embodiment that describes the best mode for carrying out the present invention is explained next in detail. The following embodiment is applicable to, for example, LTE (Long Term Evolution), LTE-Advanced and the like.

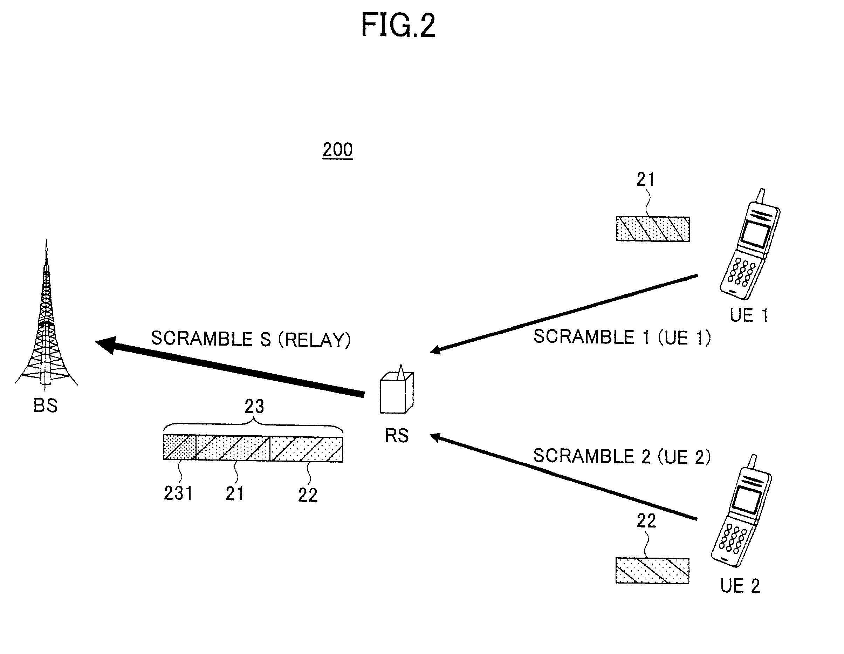

FIG. 2 is a schematic view illustrating a communications system 200 according to the embodiment of the present invention. The communications system 200 includes mobile stations UE1 and UE2, a relay station RS and a base station BS.

The mobile station UE1 adds a CRC (Cyclic Redundancy Check) to transmission data, and performs coding and then modulation using a scramble 1 of the mobile station UE1. The mobile station UE1 transmits the modulated data as a MAC_PDU 21 from its antenna.

In a similar fashion, the mobile station UE2 adds a CRC (Cyclic Redundancy Check) to transmission data, and performs coding and then modulation using a scramble 2 of the mobile station UE2. The mobile station UE2 transmits the modulated data as a MAC_PDU 22 from its antenna.

Hereinafter, a scramble sequence for each UE is referred to as a PHY_ID.

Thus, communication is performed by replacing a UE_ID with a unique scramble sequence (PHY_ID) corresponding to the UE_ID, and thereby it is possible to reduce the amount of the MAC header to be added.

On the other hand, for the base station BS, the relay station RS is also regarded as one mobile station UE. The relay station RS includes MAC_SDUs of plural mobile stations UE1 and UE2 in a single transport block TB to make its own MAC_SDU. The relay station RS then adds a CRC to the MAC_SDU, and performs coding and then modulation using a scramble S (PHY_ID) which indicates the relay station RS. The relay station RS transmits the resultant as a MAC_PDU 23 from its antenna.

Each mobile station and each relay station may perform scrambling before or after the coding process.

With the above described structure, the information of PHY_ID used between each mobile station UE and the relay station RS is lost. Therefore, the relay station RS collects header information of all mobile stations UE mapped in the MAC_PDUs to generate a relay station header 231 and adds the relay station header 231 as its MAC header.

Thus, the amount of the MAC header to be added is reduced between each of the mobile stations UE1 and UE2 and the relay station RS, which results in an improvement in usage efficiency of information communication.

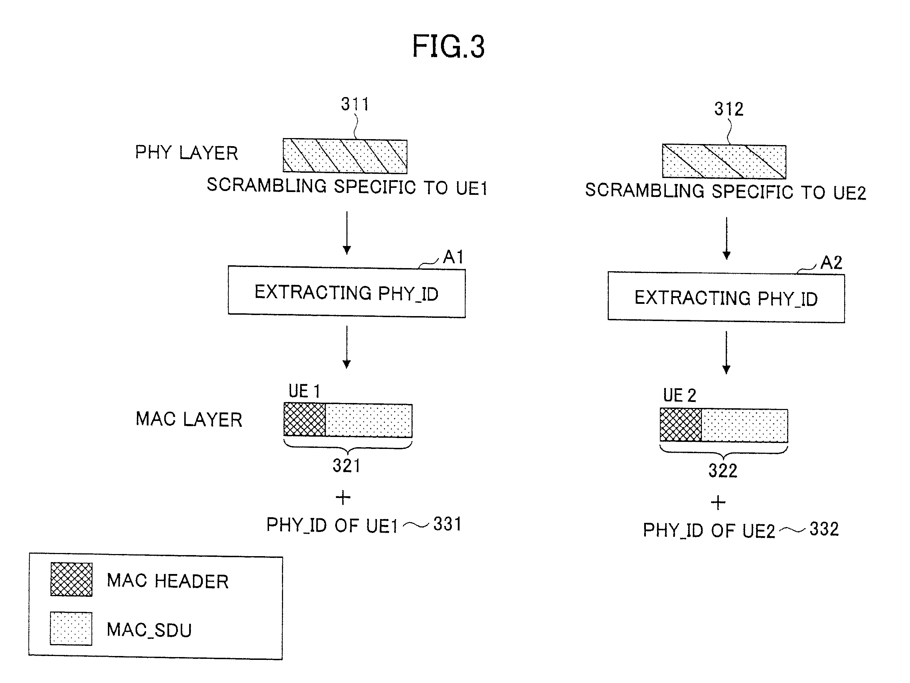

Processes of the relay station are explained next with reference to FIGs. 3 to 5.

FIG. 3 is a schematic view illustrating processes of the relay station RS according to one embodiment of the present invention.

As shown in FIG. 3, in a PHY layer, transmission data 311 and 312 transmitted by the mobile stations UE1 and UE2, respectively, have been scrambled using a scramble code specific to each of the mobile stations UE1 and UE2.

The relay station RS descrambles a UE specific scramble sequence, and determines that the scramble sequence is correct if the CRC check is successful. Herewith, a PHY_ID of each UE is extracted (Steps A1 and A2).

The scramble sequence applied to descrambling may be specified by that the relay station RS preliminarily trains scheduler information.

If the CRC check is successful and the PHY_ID is extracted, a MAC_PDU 321/322 and a PHY_ID 331/332 are obtained for each of the mobile stations UE1 and UE2.

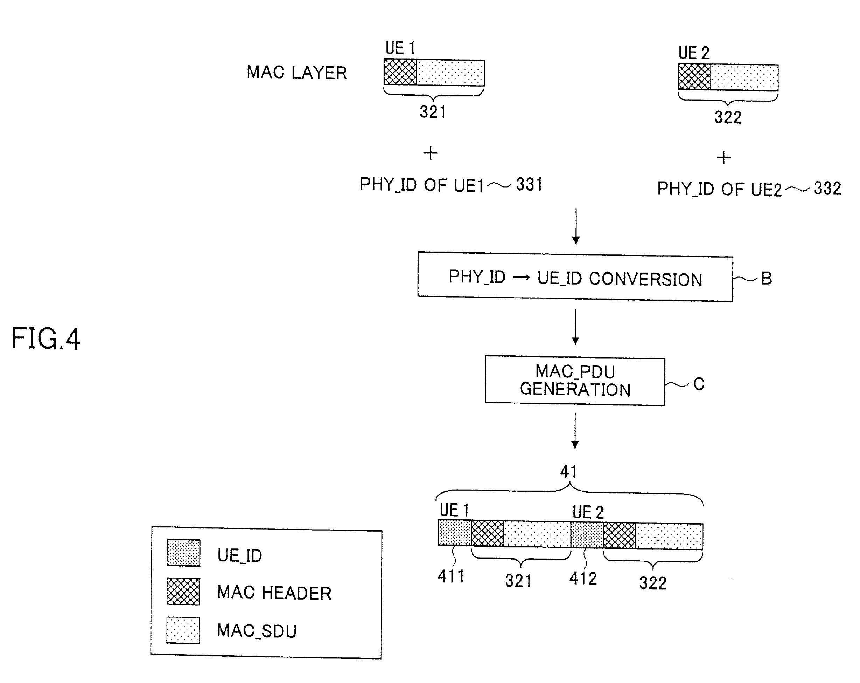

FIG. 4 is a schematic view subsequent to FIG. 3, illustrating the process of the relay station RS according to the embodiment of the present invention.

As has been described with reference to FIG. 3, the MAC_PDUs 321 and 322 and the PHY_IDs 331 and 332 in the MAC layers of the mobile stations UE1 and UE2, respectively, have been obtained.

For each mobile station UE, conversion is performed from the PHY_IO in the PHY layer to a UE_ID in the MAC layer (Step B).

The conversion is performed by, for example, searching a table storing PHY_IDs and UE_IDs in association with each other for a UE_ID associated with the PHY_ID in the PHY layer. The searched UE ID is embedded in the MAC header so that the identification information of the UE specified by the PHY_ID is not lost.

Note that the above conversion is necessary in the case when the PHY_ID has been converted in a form suitable for being mapped in a physical layer. However, in the case where the PHY_ID is the same as its corresponding UE_ID, there is no need to perform the conversion.

Next, a new MAC_PDU is generated by multiplexing MAC_PDUs of the respective UEs (Step C). Herewith, a signal format 41, in which UE_ID information 411 and 412 are respectively inserted in front of the MAC_PDU of a corresponding UE, is obtained.

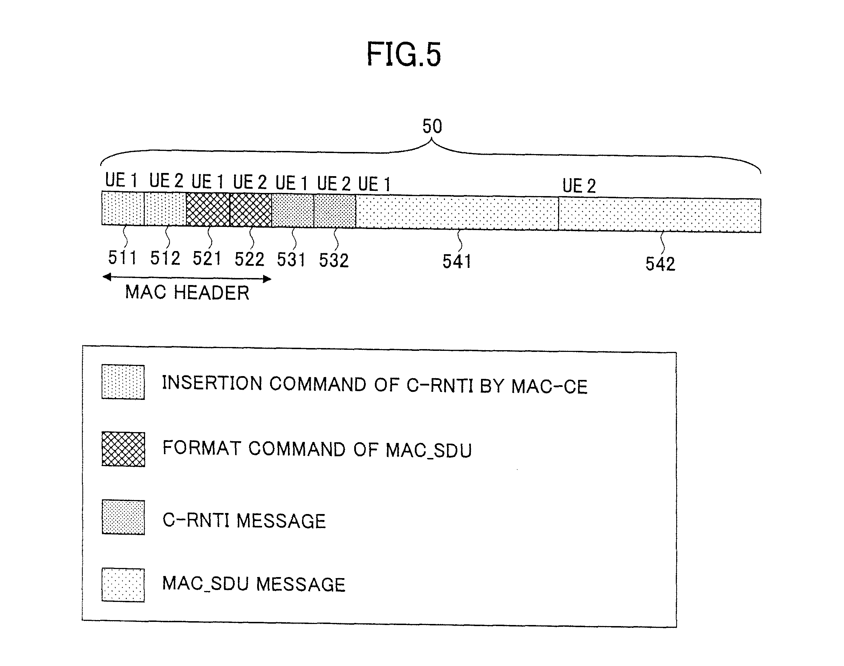

According to the format 41 shown in FIG. 4, since the MAC_PDUs are disposed in accordance with the respective UEs, the MAC headers and MAC_SDUs are provided in a mixed manner. The format 41 may be changed to a format 50 of FIG. 5 to make the information easier to transmit by LTE, LTE-Advanced or the like.

FIG. 5 shows the format 50 of a MAC_PDU after UE multiplexing.

According to the format 50 of FIG. 5, all the MAC header information is disposed at the beginning.

The format 50 includes MAC control elements (MAC-CEs) 511 and 512 that are PHY layer control information each corresponding to the mobile stations UE1 and UE2 and inserted in the MAC layers. Each MAC control element indicates physical layer control information inserted in a MAC layer.

MAC_SDU format commands 521 and 522 corresponding to the mobile stations UE1 and UE2, respectively, carry LCH (Logical CHannel), information length and the like of the corresponding MAC_SDUs.

C-RNTIs 531 and 532 corresponding to the mobile stations UE1 and UE2, respectively, are UE_IDs managed at the base station and used as IDs in the MAC layers to RRC layers. A C-RNTI is a unique identifier that the base station assigns to each user apparatus present in the cell of the base station.

The format 50 further includes MAC_SDU messages 541 and 542.

Herewith, the UE-IDs are mapped in the PHY layers between the mobile stations UE and the relay station RS, which reduces redundancy in the MAC header and improves the wireless frequency usage efficiency. Furthermore, the relay station RS includes more information in one transport block TB by combining plural UEs at the time of generating a MAC_PDU, thus achieving a coding gain and improving the effective throughput.

Next are described structures of the base station, relay station and mobile station that implement the UE multiplexing explained above with reference to FIGs. 2 to 5.

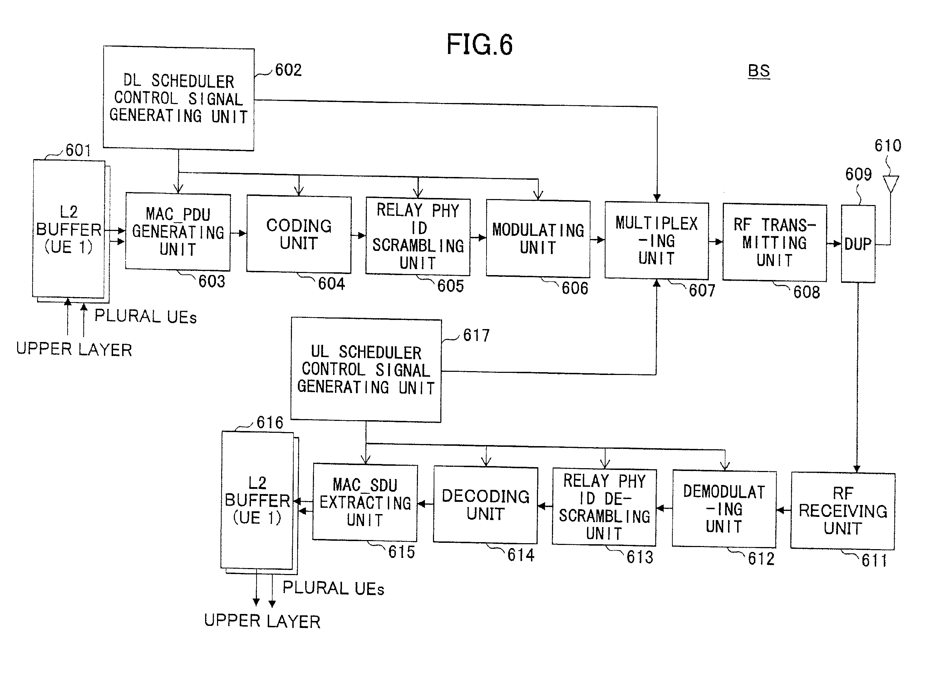

FIG. 6 is a block diagram showing a structural example of the base station BS.

Next is described the operation for downlink (DL) signal transmission.

Information packets received by the base station BS through a core network (not shown) are subjected to processes in an upper layer, such as a concealment process and IP header compression, and then stored in L2 buffers 601, each corresponding to a UE which is a transmission destination.

A DL scheduler control signal generating unit 602 generates a control signal which provides each UE a chance to perform transmission according to an appropriate algorithm.

FIG. 6 shows a flow of information packets transmitted to UEs from the base station BS via the relay station RS. The DL scheduler control signal generating unit 602 instructs MAC_PDU generation in consideration of the amount of information packets assigned to the relay station RS and the amount of information packets distributed from the amount assigned to the relay station RS and directed to each UE via the relay station RS.

A MAC_PDU generating unit 603 reads information packets from the L2 buffer 601 in increments of the amount of transmitted information (transport block TB) in accordance with the control signal of the DL scheduler control signal generating unit 602, and generates a MAC_PDU according to a predetermined format.

The MAC_PDU generating unit 603 generates one MAC_PDU by adding MAC header information including the UE_ID information and multiplexing plural UEs, and sends the MAC_PDU to a coding unit 604.

The coding unit 604 performs error-correction coding appropriate for propagation channels of the base station BS and the relay station RS, and sends the resultant to a scrambling unit 605.

The scrambling unit 605 performs scrambling which indicates that the transmission is directed to the relay station RS and sends the resultant to a modulating unit 606.

The modulating unit 606 performs appropriate modulations and sends the resultant to a multiplexing unit 607.

The multiplexing unit 607 multiplexes the control single of the DL scheduler control signal generating unit 602 and a control signal of a UL (uplink) scheduler control signal generating unit 617, and transmits the resultant to a RF transmitting unit 608.

The RF transmitting unit 608 performs up-conversion to RF (radio frequency), and transmits the resultant from an antenna 610 via a duplexer (DUP) 609.

Next is described the operation for UL signal transmission.

A signal received by the antenna 610 is sent to a RF receiving unit 611 via the duplexer 609. The RF receiving unit 611 down-converts the received signal to base band frequencies and sends the resultant to a demodulating unit 612.

The demodulating unit 612 performs appropriate demodulation based on UL schedule information instructed in the past, and sends the resultant to a descrambling unit 613.

The descrambling unit 613 performs descrambling in order to determine if the transfer is made from the relay station RS to the base station BS, and sends the resultant to a decoding unit 614.

The decoding unit 614 performs error-correction decoding and sends the resultant to a MAC_SDU extracting unit 615.

In the case when the CRC check is successful, the MAC_SDU extracting unit 615 performs extraction of MAC_SDUs from a correctly received MAC_PDU. Then, the MAC_SDU extracting unit 615 stores information at the right place in a L2 buffer 616 with respect to each UE based on UE_ID information included in the MAC header.

Once the information packets are duplicated, the L2 buffer 616 transmits the information packets to an upper layer.

The information output from the L2 buffer 616 is subjected to processes, such as concealment cancellation and IP header decompression, and then output to the core network (not shown).

In the base station BS of FIG. 6, the L2 buffer 616 is provided for each UE; however, only one L2 buffer may be used for plural UEs according to another embodiment of the present invention.

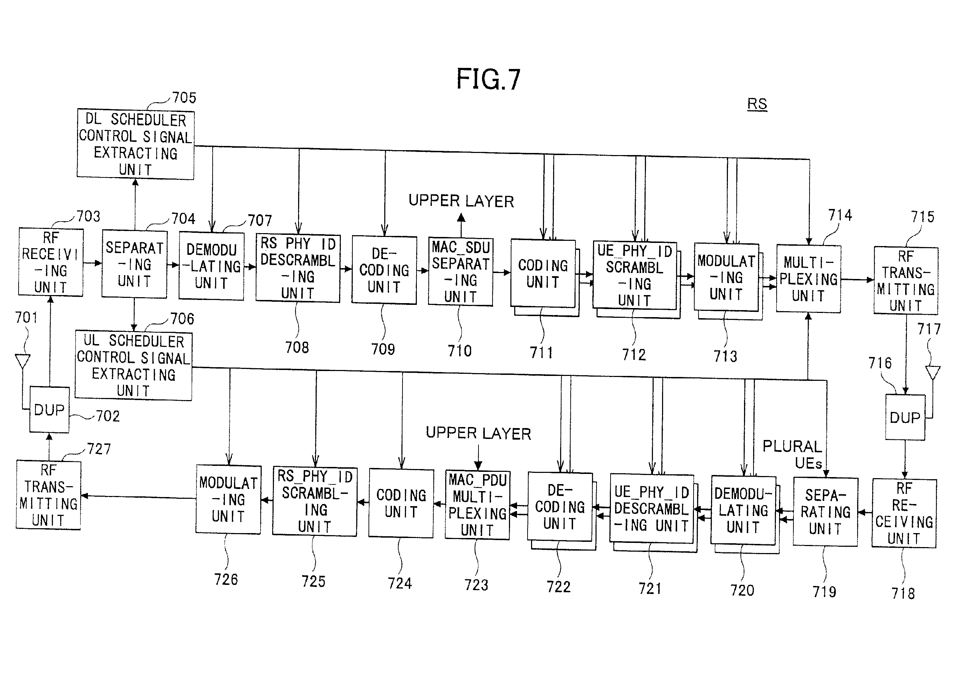

FIG. 7 is a block diagram showing a structural example of the relay station RS.

Next is described the operation for DL signal transmission.

A signal received by an antenna 701 is sent to a RF receiving unit 703 via a duplexer (DUP) 702.

The RF receiving unit 703 down-converts the received signal to base band frequencies and sends the resultant to a separating unit 704.

The separating unit 704 reads DL scheduler information and UL scheduler information and sends the information to a DL scheduler control signal extracting unit 705 and a UL scheduler control signal extracting unit 706.

Based on the read DL scheduler information, a demodulating unit 707 performs demodulations for the relay station on the received signal and sends the resultant to a RS_PHY_ID descrambling unit 708.

The RS_PHY_ID descrambling unit 708 performs descrambling in order to determine the transfer made from the base station BS to the relay station RS, and sends the resultant to a decoding unit 709.

The decoding unit 709 performs error-correction decoding and sends the resultant to a MAC_SDU separating unit 710. If the CRC check at the decoding unit 709 is successful, a MAC_PDU has been correctly received.

The MAC_SDU separating unit 710 separates MAC_SDUs from the MAC_PDU with reference to MAC header information and performs a process of sorting signals directed to the relay station RS and the respective UEs. At this point, if there is a signal directed to the relay station RS, the MAC_SDU separating unit 710 transfers it to an upper layer.

A coding unit 711 performs error-correction coding appropriate for a propagation channel of the relay station and each UE on a separated received signal for a corresponding UE, and sends the resultant to a UE_PHY_ID scrambling unit 712.

The UE_PHY_ID scrambling unit 712 performs scrambling which indicates that the transmission is directed to the UE and sends the resultant to a modulating unit 713.

The modulating unit 713 performs appropriate modulations and sends the resultant to a multiplexing unit 714.

The multiplexing unit 714 multiplexes a control signal of the DL scheduler control signal extracting unit 705 and a control signal of the UL scheduler control signal extracting unit 706, and sends the resultant to a RF transmitting unit 715.

The RF transmitting unit 715 performs up-conversion to RF, and sends the resultant from an antenna 717 via a duplexer (DUP) 716.

Next is described the operation for UL signal transmission.

A signal received by the antenna 717 is sent to a RF receiving unit 718 via the duplexer (DUP) 716.

The RF receiving unit 718 down-converts the received signal to base band frequencies and sends the resultant to a separating unit 719.

The separating unit 719 performs signal separation for each UE based on UL schedule information instructed in past times, and sends the resultant to a demodulating unit 720.

The demodulating unit 720 performs demodulations appropriate for each UE, and sends the resultant to a UE_PHY_ID descrambling unit 721.

The UE_PHY_ID descrambling unit 721 performs descrambling in order to determine the transfer made from a corresponding UE to the relay station, and sends the resultant to a decoding unit 722.

The decoding unit 722 performs error-correction decoding and sends the resultant to a MAC_PDU multiplexing unit 723. If the CRC check is successful, a MAC_PDU has been correctly received.

The MAC_PDU multiplexing unit 723 performs UE multiplexing, in which all UEs that have passed the CRC check are put in a single MAC_PDU, and sends the resultant to a coding unit 724. Note that in the case where there is a signal to be sent from an upper layer of the relay station RS to the base station BS, the MAC_PDU multiplexing unit 723 also multiplexes the signal. The multiplexing is performed in such a manner that information corresponding to UE_PHY_IDs is included in the MAC header so that UEs can be identified.

After the MAC_PDU multiplexing unit 723 reconstructs the MAC_PDU in this manner, the coding unit 724 performs error-correction coding appropriate for a propagation channel from the relay station RS to the base station BS, and sends the resultant to a RS_PHY_ID scrambling unit 725.

The RS_PHY_ID scrambling unit 725 performs scrambling which indicates that the information is to be sent from the relay station RS to the base station BS and sends the resultant to a modulating unit 726.

The modulating unit 726 performs appropriate modulations and sends the resultant to a RF transmitting unit 727.

The RF transmitting unit 727 up-converts the transmission signal to RF, and transmits the resultant from the antenna 701 via the duplexer 702.

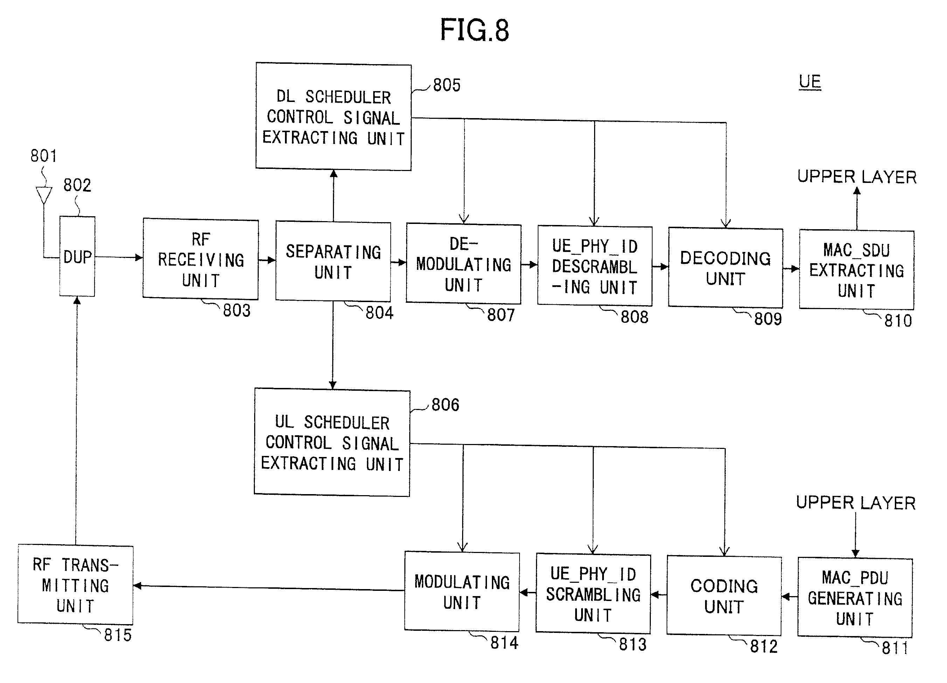

FIG. 8 is a block diagram showing a structural example of the mobile station UE.

Next is described the operation for DL signal transmission.

A signal received by an antenna 801 is sent to a RF receiving unit 803 via a duplexer 802.

The RF receiving unit 803 down-converts the received signal to base band frequencies and sends the resultant to a separating unit 804.

The separating unit 804 reads DL scheduler information and UL scheduler information and sends the information to a demodulating unit 807. The DL scheduler information and the UL scheduler information are also sent to a DL scheduler control signal extracting unit 805 and a UL scheduler control signal extracting unit 806, respectively.

Based on the read DL scheduler information, the demodulating unit 807 performs demodulations for its own UE and sends the resultant to a UE_PHY_ID descrambling unit 808.

The UE_PHY_ID descrambling unit 808 performs descrambling in order to determine the transfer made from the relay station RS to the UE, and sends the resultant to a decoding unit 809.

The decoding unit 809 performs error-correction decoding and sends the resultant to a MAC_SDU extracting unit 810. If the CRC check is successful, a MAC_PDU has been correctly received.

The MAC_SDU extracting unit 810 extracts MAC_SDUs from the MAC_PDU using MAC header information, and transfers the MAC_SDUs to an upper layer.

Next is described the operation for UL signal transmission.

Information packets generated in an upper layer are subjected to processes, such as a concealment process and IP header compression, to create MAC_ SDUs.

A MAC_PDU generating unit 811 generates a MAC_PDU by bundling MAC_SDUs corresponding to the transmittable amount of information instructed by the UL scheduler, and sends the MAC_PDU to a coding unit 812.

The coding unit 812 performs error-correction coding appropriate for a propagation channel from the mobile station UE to the relay station RS, and sends the resultant to a UE_PHY_ID scrambling unit 813.

The UE_PHY_ID scrambling unit 813 performs scrambling which indicates that the transmission is directed from the UE to the relay station RS, and sends the resultant to a modulating unit 814.

The modulating unit 814 performs appropriate modulations and sends the resultant to a RF transmitting unit 815.

The RF transmitting unit 815 performs up-conversion to RF, and transmits the resultant from the antenna 801 via the duplexer (DUP) 802.

Thus, the operations for signal transmission in the base station BS, the relay station RS and the mobile station UE have been described. Next are given further detailed explanations on downlink UE separation and uplink UE multiplexing at the relay station RS.

[UE separation]

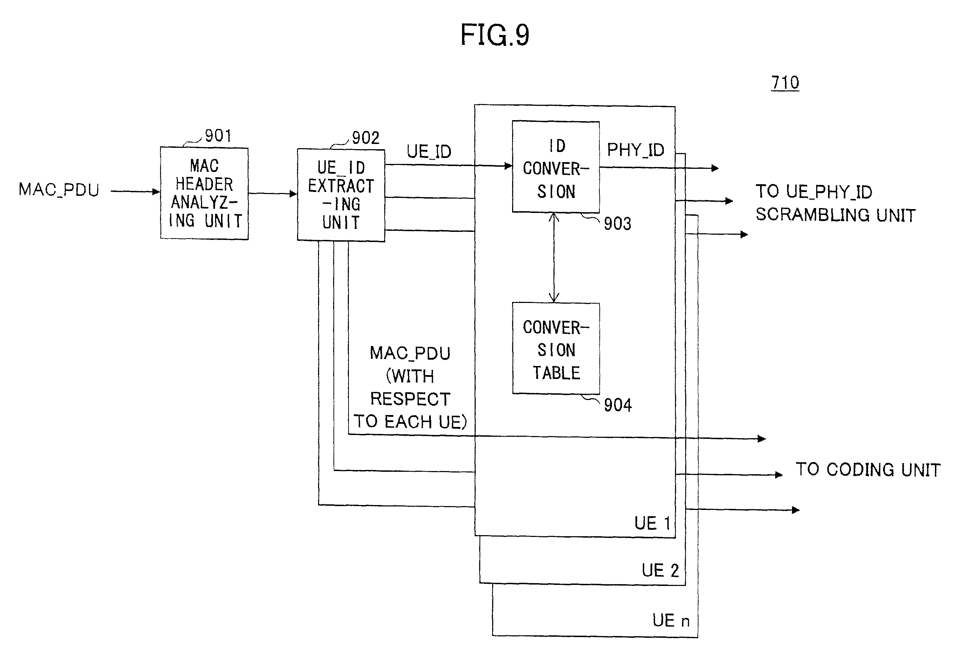

FIG. 9 is a block diagram showing a structural example of the MAC_SDU separating unit 710 of the relay station RS shown in FIG. 7.

A MAC_PDU which has passed the CRC check is input to a MAC header analyzing unit 901.

The MAC header analyzing unit 901 analyzes the MAC header of the input MAC_PDU and sends the resultant to a UE_ID extracting unit 902.

The UE_ID extracting unit 902 extracts UE_IDs included in the MAC header and MAC_PDUs corresponding to the UE_IDs. The UE_IDs are sent to an ID converting unit 903 with respect to each UE. The MAC_ PDUs are sent to a coding unit 711 (FIG. 7) with respect to each UE.

With reference to a conversion table 904, the ID converting unit 903 converts each UE_ID to a PHY_ ID used for scrambling. Then, PHY_IDs are sent to the coding unit 711 (FIG. 7) with respect to each UE.

Thus, the MAC_SDU separating unit 710 is able to perform UE separation, which is the reverse of the UE multiplexing described with reference to FIGs. 2 to 5.

[UE Multiplexing]

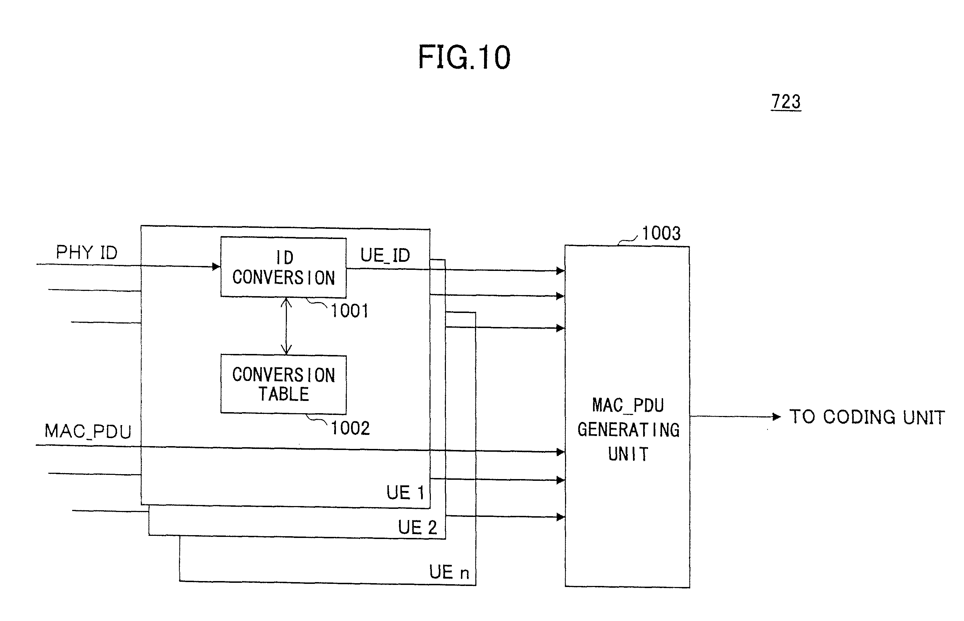

FIG. 10 is a block diagram showing a structural example of the MAC_SDU multiplexing unit 723 of the relay station RS shown in FIG. 7.

A MAC_PDU for each user that has passed the CRC check and a PHY_ID corresponding to the MAC_ PDU are input to the MAC_SDU multiplexing unit 723.

The PHY_ID is converted by an ID converting unit 1001 using a conversion table 1002 to a UE_ID which can be recognized in the MAC layer. The converted UE_ID and the MAC_POU are input to a MAC_PDU generating unit 1003 with respect to each user.

Using the format including UE_IDs in the MAC header, described with reference to FIG. 5, the PDU generating unit 1003 multiplexes all UEs corresponding to the UE_IDs into a single MAC_PDU and sends the MAC_PDU to the coding unit 724.

Thus, the MAC_SDU multiplexing unit 723 is able to perform the UE multiplexing described with reference to FIGs. 2 to 5.

[Relay Station Recognition]

Next is described recognition for the relay station RS.

For the base station BS, the relay station RS according to the embodiment described above is regarded as a special mobile station UE.

Therefore, when a new relay station RS is installed and starts up, or when the relay station RS starts up from the energy saving mode (RRC idle) to the active mode (RRC connected), preparation is necessary for the base station BS to recognize the relay station RS and enter into communication.

Like an ordinary mobile station UE, the relay station RS requests an RRC connection in RACH process to the base station BS when starting up, and sets a relay-station communication configuration.

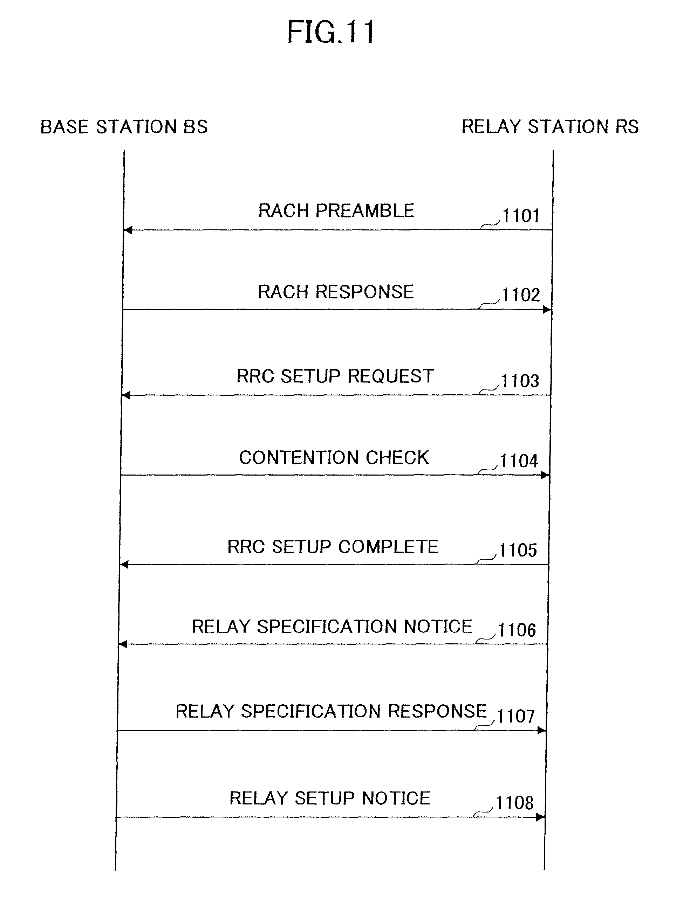

FIG. 11 is a sequence diagram showing registration processing performed between the base station BS and the relay station RS at the time when the relay station RS starts up.

The relay station RS autonomously transmits a RACH preamble to the base station BS (Step S1101).

When detecting the RACH preamble, the base station BS sends back a RACH response in return to the RACH preamble if the traffic allows (Step S1102).

Once transmitting the RACH preamble, the relay station RS waits for a RACH response in return to the RACH preamble. If receiving a RACH response within a predetermined period of time, the relay station RS regards it as a transmission permit and transmits an RRC setup Request on which an equivalent to a network ID of a mobile station UE has been added (Step S1103).

When receiving the RRC setup request, the base station BS sends back a contention check including an equivalent to the network ID of the mobile station UE (Step S1104). Since the contention check indicates the ID of the single mobile station UE, it is possible to select the UE even when cross talk with other mobile stations UEs is present during a RACH procedure. This is the reason why the check is called "contention check".

Thus far has been described the RACH procedure.

The relay station RS transmits to the base station BS, a RRC setup Request Complete corresponding to the RRC setup Request in the RACH procedure (Step S1105).

Subsequently, the relay station RS transmits Relay specification notice which indicates that the relay station RS is a relay station (Step S1106).

When receiving the notice, the base station BS sends back a Relay specification response which indicates that the base station BS has recognized the relay station RS as a communication target (Step S1107).

Also, the base station BS transmits setting information required by the relay station RS (MCS between the base station and the relay station, transmission power of the relay station, a carrier wave frequency after relay and so on) as Relay setup notice (Step S1108).

At the point of receiving the setting, the relay station RS starts functioning as a relay station.

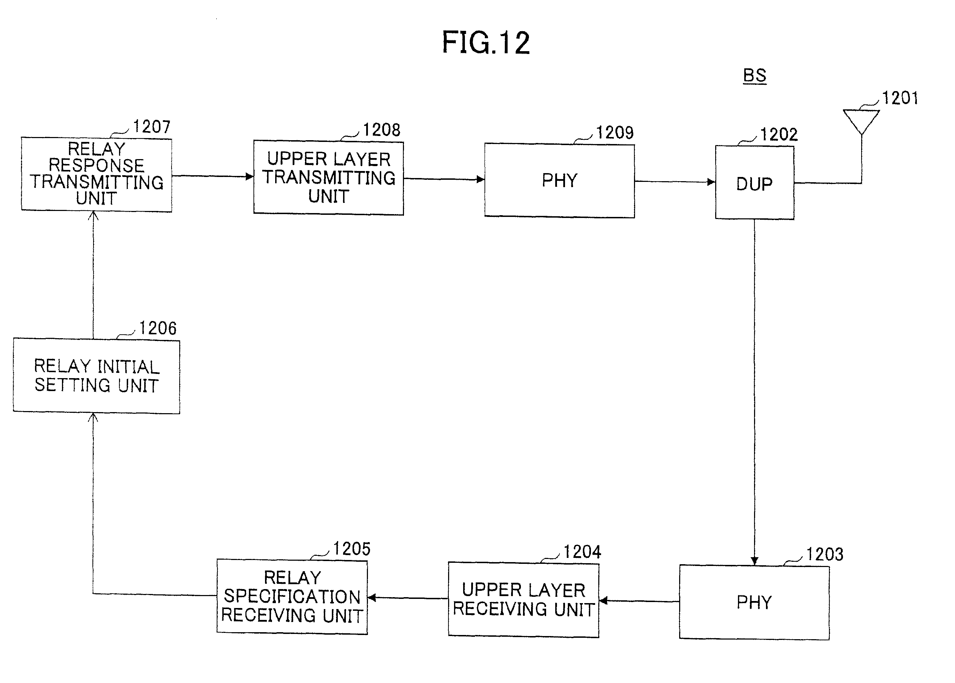

Next is described the operation of the base station BS for achieving the registration processing sequence described with reference to FIG. 11. FIG. 12 is a block diagram showing the structure of the base station BS for signaling.

A signal received by an antenna 1201 is sent to a PHY 1203 via a duplexer 1202.

The PHY 1203 extracts a MAC_SDU from the received signal and sends the MAC_SDU to an upper layer receiving unit 1204.

The upper layer receiving unit 1204 extracts a wireless unit control instruction from the received MAC_SDU.

Based on the extracted control instruction, the base station BS implements a processing circuit described below in order to recognize a corresponding relay station and starts up communication properly.

From the control instruction extracted by the upper layer receiving unit 1204, a Relay specification receiving unit 1205 receives a Relay specification notice message which is sent from the relay station RS after the RACH process.

According to the Relay specification message received by the Relay specification receiving unit 1205, a Relay initial setting unit 1206 determines a setting required by the relay station RS in view of the wireless condition with the relay station RS and the installation conditions of neighboring base stations and relay stations.

A Relay response transmitting unit 1207 sends back to the relay station RS, a response (Relay specification response) indicating that the Relay specification notice from the relay station RS has been received. Next, the Relay response transmitting unit 1207 sends a Relay Station initial setting (Relay setup notice) determined by the Relay initial setting unit 1206 to an upper layer transmitting unit 1208.

The upper layer transmitting unit 1208 uses the response from the Relay response transmitting unit 1207 and the Relay Station initial setting to form a MAC_SDU, and generates a MAC_PDU according to the wireless condition and sends the MAC_PDU to a PHY 1209.

The MAC_PDU is converted to a signal format by the PHY 1209 and then transmitted from the antenna 1201 via the duplexer (DUP) 1202.

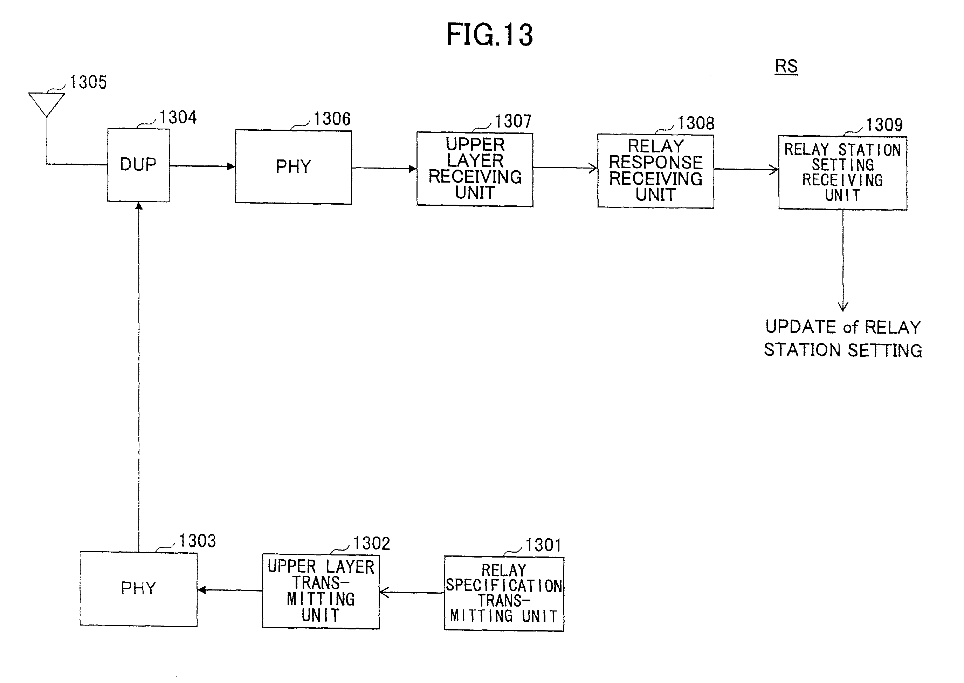

Next is described the operation of the relay station RS for achieving the registration processing sequence described with reference to FIG. 11. FIG. 13 is a block diagram showing the structure of the relay station RS for signaling.

After issuing RRC setup Complete notice to the base station BS following the end of the RACH process, a Relay specification transmitting unit 1301 transmits information indicating that the relay station RS is not a common UE but a relay station.

An upper layer transmitting unit 1302 uses the information as a MAC_SDU and generates a MAC_PDU according to the wireless condition.

A PHY 1303 converts the MAC_PDU generated by the upper layer transmitting unit 1302 to a signal format and transmits the MAC_PDU from an antenna 1305 via a duplexer (DUP) 1304.

On the other hand, a signal received by the antenna 1305 is sent to a PHY 1306 via the duplexer (DUP) 1304.

The PHY 1306 extracts a MAC_SDU from the received signal and sends the MAC_SDU to an upper layer receiving unit 1307.

The upper layer receiving unit 1307 extracts a wireless unit control instruction from the MAC_SDU.

Based on the extracted control instruction, the relay station implements a processing circuit described below in order to cause the base station BS to recognize the relay station and start up communication properly.

A Relay response receiving unit 1308 receives a response (Relay specification response) of the base station BS indicating that the base station BS has received Relay specification notice issued from the relay station RS.

At this point, a PHY layer ID is assigned, which is to be used by the assigned relay station in a unique manner, and a PHY_ID for a relay station is applied instead of a PHY_ID for a communication terminal.

A Relay Station setting receiving unit 1309 receives a Relay Station initial setting following the Relay specification response, and sets setting values of the initial setting in its own relay station RS. Herewith, the relay station RS starts the operation as a relay station.

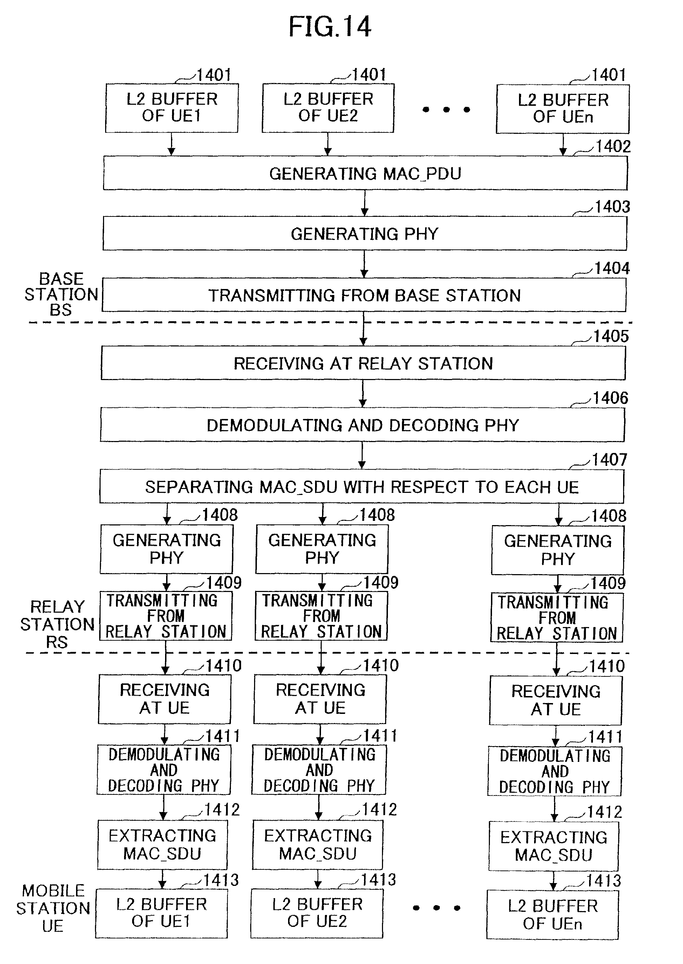

FIG. 14 is a flow diagram showing the operations of the base station BS, the relay station RS and the mobile stations UE for downlink transmission.

The base station BS takes out transmission data from the L2 buffers, each of which is provided for a different UE (Step S1401), and generates a MAC_PDU in which the transmission data directed to the respective UEs are multiplexed (Step S1402). The base station BS generates a PHY from the MAC_PDU (Step S1403) and transmits the PHY as a transmission signal (Step S1404).

The relay station RS receives the transmission signal transmitted by the base station BS (Step S1405), demodulates, and decodes the transmission signal (Step S1406). The relay station RS separates a MAC_SDU with respect to each mobile station UE from the demodulated and decoded data (Step S1407), generates PHYs (Step S1408) and transmits the PHYs as transmission signals (Step S1409).

Each mobile station UE receives a transmission signal transmitted from the relay station RS and directed to the mobile station UE (Step S1410), and demodulates and decodes the PHY (Step S1411). The mobile station UE extracts a MAC_SDU from the received data after demodulation and decoding (Step S1412) and stores the received data in its own L2 buffer (Step S1413).

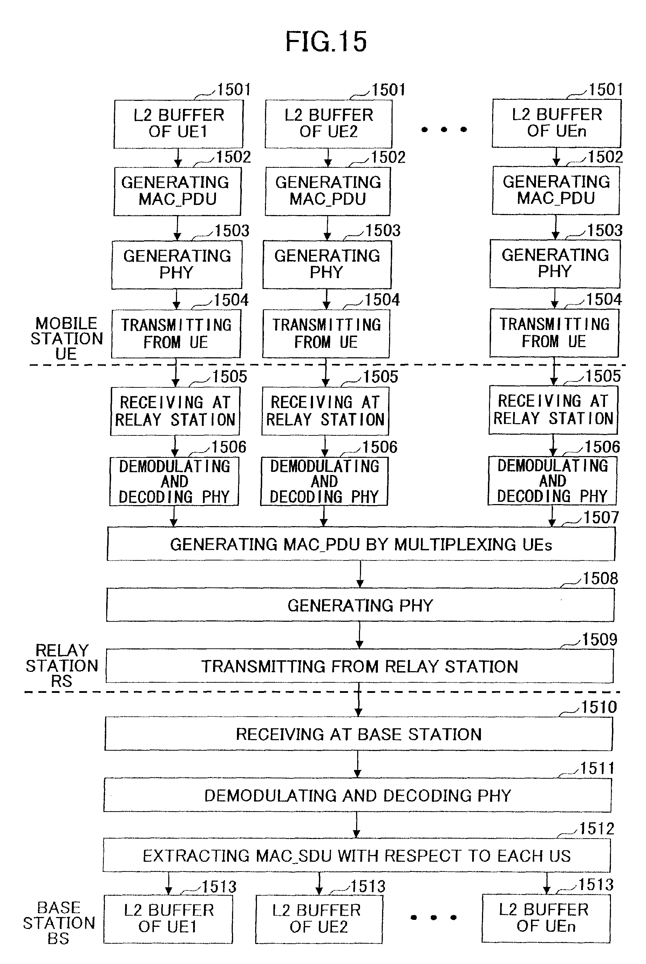

FIG. 15 is a flow diagram showing the operations of the mobile stations UE, the relay station RS and the base station BS for uplink transmission.

Each of the mobile stations UE1-UEn takes out transmission data from its own L2 buffer (Step S1501) and generates a MAC_PDU (Step S1502). Each of the mobile stations generates a PHY from the MAC_PDU (Step S1503) and transmits the PHY as a transmission signal (Step S1504).

The relay station RS receives the transmission signals transmitted by the respective mobile stations UE1-UEn (Step S1505) and obtains MAC_SDUs by demodulating and decoding the PHYs (Step S1506). The relay station RS then multiplexes the obtained MAC_SDUs to generate a MAC_PDU (Step S1507). The relay station RS generates a PHY from the generated MAC_PDU (Step S1508), and transmits the PHY as a transmission signal (Step S1509).

The base station BS receives the transmission signal from the relay station RS (Step S1510), and demodulates and decodes the PHY (Step S1511). Then, from the demodulated and decoded PHY, the base station BS extracts a MAC_SDU for each mobile station UE, and stores the received data in an L2 buffer provided for the mobile station UE (Step S1513).

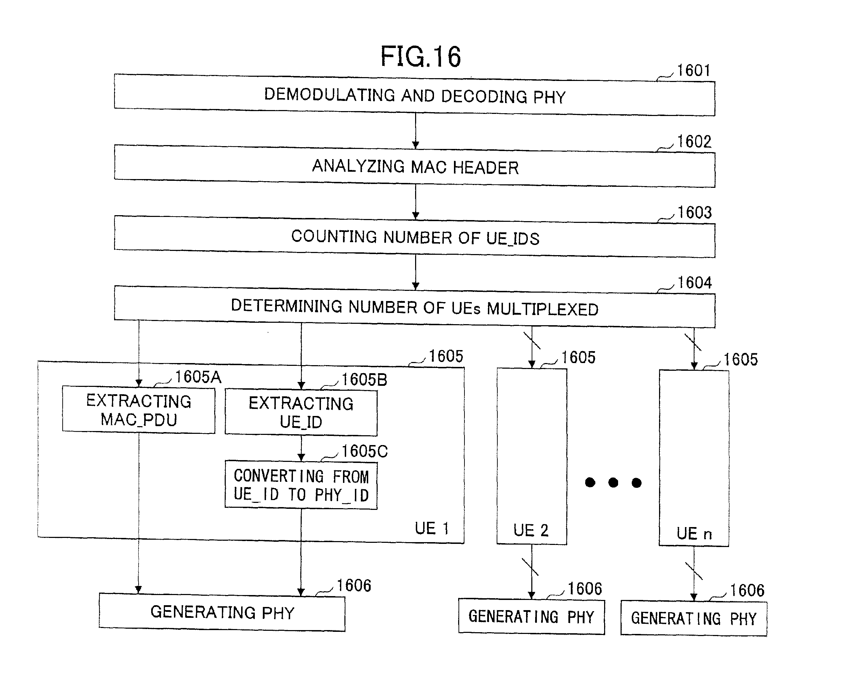

With reference to FIG. 16, the following gives further details of the operation of the relay station RS for downlink transmission, from the demodulation and decoding of the PHY received from the base station BS (Step S1406 of FIG. 14) to the generation of the PHY with respect to each mobile station UE (Step S1408 of FIG. 14).

FIG. 16 is a flow diagram showing separation of mobile stations UEs and ID replacement in the MAC layer during the downlink transmission.

The relay station RS demodulates and decodes the PHY received from the base station BS (Step S1601) and analyzes the MAC header included in the received data (Step S1602). The relay station RS then counts the number of UE IDs of mobile stations UEs which have been multiplexed onto the received data (Step S1603) and determines the number of the mobile stations UEs multiplexed (Step S1604).

Next the relay station RS extracts a MAC_PDU with respect to each of the multiplexed mobile stations UEs (Step S1605A). At the same time, the relay station RS extracts a UE_ID (Step S1605B) and converts the UE_ID to a PHY_ID (Step S1605C). These steps S1605A to 1605C are performed for each mobile station UE (Step S1605).

Next, the relay station RS generates a PHY for each of the multiplexed mobile stations UEs based on the extracted MAC_PDU and the converted PHY_ID (Step S1606).

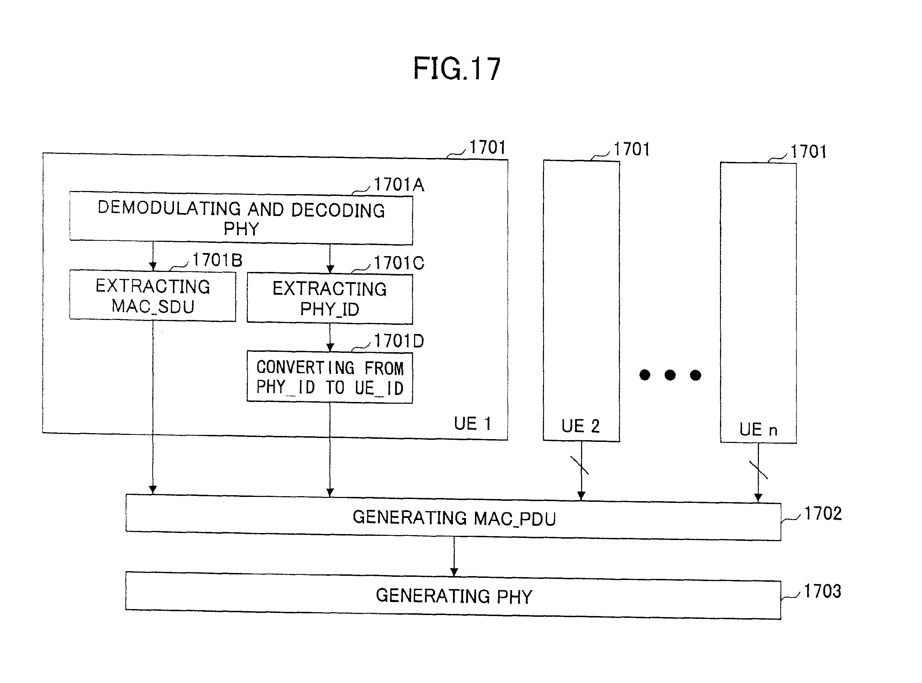

With reference to FIG. 17, the following gives further details of the operation of the relay station RS for uplink transmission, from the demodulation and decoding of the PHYs received from the mobile stations UEs (Step S1506 of FIG. 15) to the generation of the PHY to be transmitted to the base station (Step S1508 of FIG. 15).

FIG. 17 is a flow diagram showing multiplexing of mobile stations UEs and ID replacement in the MAC layer at the time of uplink transmission.

The relay station RS demodulates and decodes a PHY received from each mobile station UE (Step S1701A). The relay station RS extracts a MAC_SDU from the received data after demodulation and decoding (Step S1701B). At the same time, the relay station RS performs extraction of a PHY_ID (Step S1701C) and conversion from the PHY_ID to a UE_ID (Step S1701D). These steps S1701A to 1701D are performed for each mobile station UE. (Step S1701).

Next the relay station RS generates a MAC_PDU based on the extracted MAC_SDUs and the converted UE_IDs (Step S1702), and generates a PHY from the MAC_PDU (Step S1703).

According to the base station BS, the relay station RS and the mobile station UE described with reference to FIGs. 6 to 8, the scheduler function is collectively provided to the base station BS. Such a scheduler is hereinafter referred to as the "base station-based scheduler". However, a part of the scheduler function may be distributed to the relay station RS. Such a scheduler is referred to as the "relay station-distributed scheduler". Next are described scheduler structures.

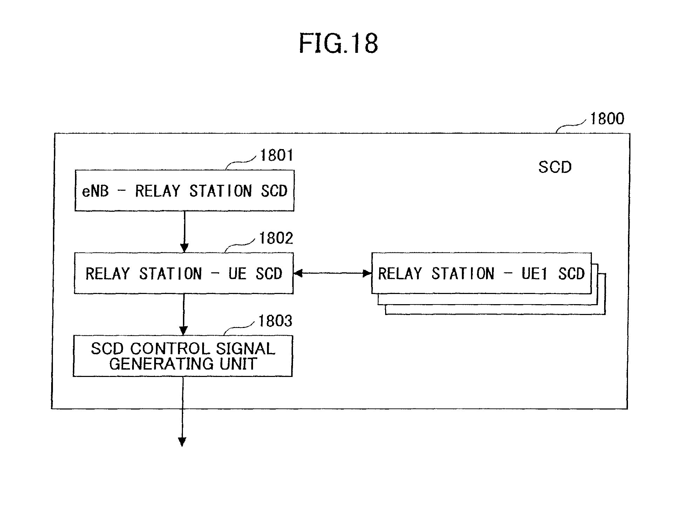

FIG. 18 is a block diagram showing the structure of a base station-based scheduler 1800.

The scheduler 1800 includes a master scheduler unit 1801 that performs resource assignment according to a propagation channel between the base station (eNB) and the relay station (Relay).

The scheduler 1800 also includes a scheduler unit 1802 that assigns resources, up to the ceiling of the resources assigned by the scheduler unit 1801, to the relay station (Relay) and each mobile station UE according to their propagation channels.

The scheduler 1800 further includes a scheduler control signal unit 1803 that multiplexes a control signal from the base station-relay station scheduler 1801 and a control signal from the relay station-mobile station scheduler 1802 and transmits the multiplexed signal.

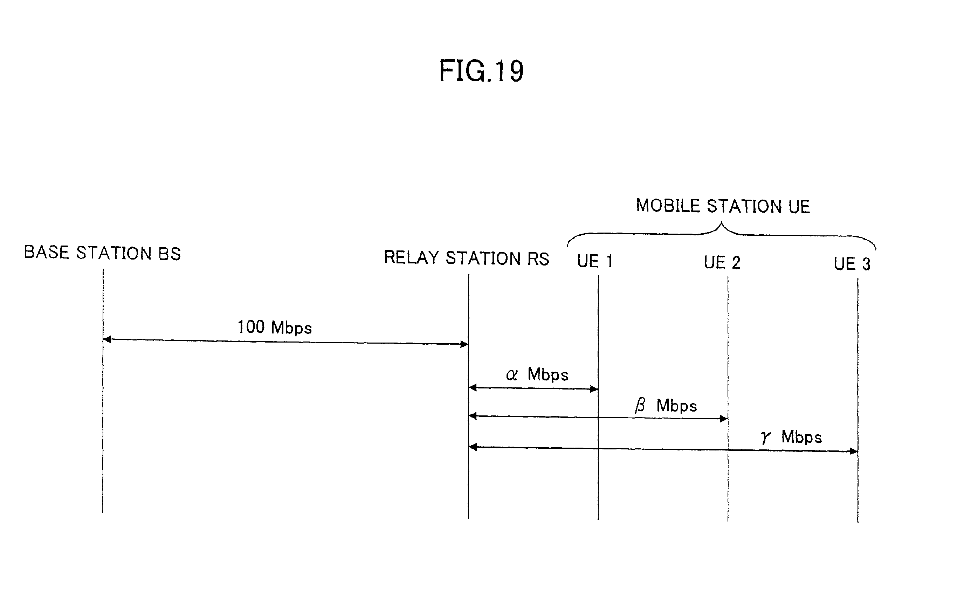

FIG. 19 illustrates a constraint condition regarding the throughput according to the base station-based scheduler structure shown in FIG. 18.

In the case of performing scheduling for the relay station and mobile stations UEs from the base station, there is no need for the relay station to buffer data. For example, in the case when communication between the base station and the relay station is performed at the communication rate of 100 Mbps, the sum of the communication rates between the relay station and each of the mobile stations UE1-UE3 has to be 100 Mbps or less. That is, when the communication rates between the relay station and each of the three mobile stations UE1-UE3 are $\alpha$ Mbps, $\beta$ Mbps and $\gamma$ Mbps, respectively, the following constraint condition needs to be satisfied.

$$\alpha + \beta + \gamma \leq 100 \qquad (1)$$

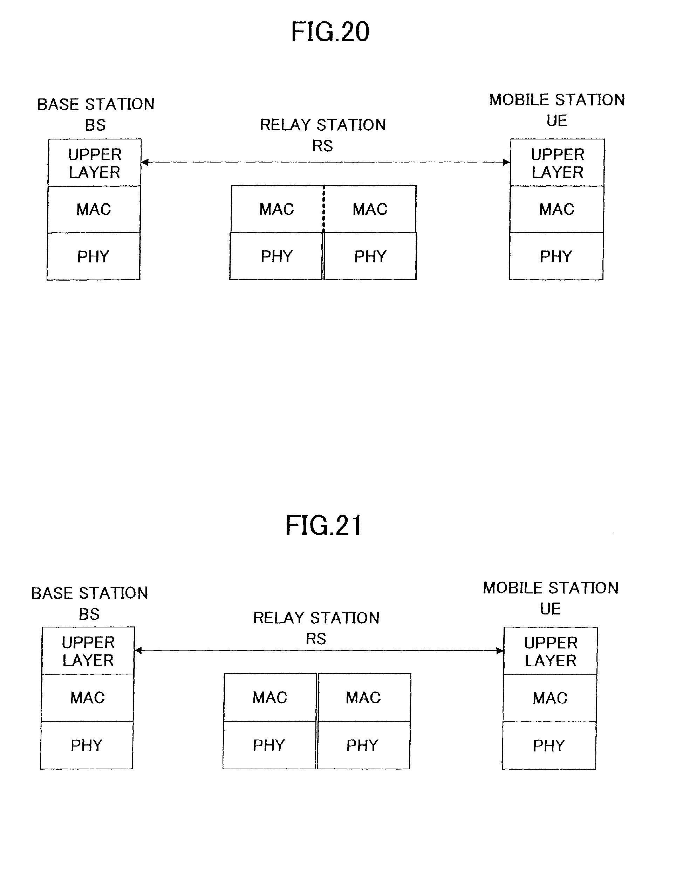

FIG. 20 shows a protocol structure in the case when the base station-based scheduler is used.

In this case, since rescheduling cannot be made at the relay station, MACs are partially not terminated. Therefore, in view of this condition, the scheduler performs multiplexing in a two-tier configuration and issues the resultant.

Thus has been described the base station-based scheduler; next is described a relay station-distributed scheduler in which a part of the scheduler function is distributed to the relay station.

FIG. 21 shows a protocol structure in the case when the relay station-distributed scheduler is used.

Since the base station and the relay station respectively have a scheduling function, MACs are completely terminated at the relay station, as shown in FIG. 21. In order to perform completely independent scheduling, the relay station needs a buffer.

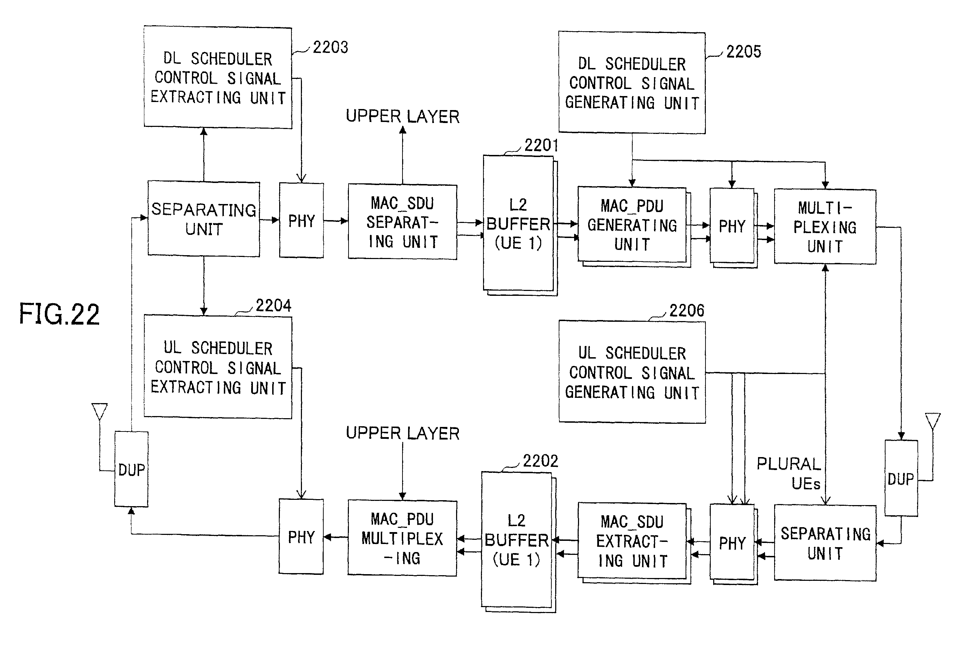

FIG. 22 is a block diagram showing a structural example of the relay station RS in the case where the relay station-distributed scheduler is used.

The relay station RS shown in FIG. 22 includes L2 buffers 2201 and 2202 corresponding to each of the mobile stations UE1-UEn, and enables operation between the base station BS and the relay station RS and between the relay station RS and each of the mobile stations UE1-UEn with completely independent scheduling.

For the communication with the base station BS, the relay station RS includes a DL scheduler control signal extracting unit 2203 and a UL scheduler control signal extracting unit 2204 and uses a scheduler control signal from the base station BS.

On the other hand, for the communication with the mobile stations, the relay station RS includes a DL scheduler control signal generating unit 2205 and a UL scheduler control signal generating unit 2206 and performs operation with scheduling independent from the units provided for the communication with the base station BS.

Since the independency of the scheduling is ensured, there is no constraint condition unlike the case of the base station-based scheduler described with reference to FIG. 19. The relay station RS is able to perform resource assignment in consideration of the buffer size and QoS of the L2 buffer.

Thus, the present invention has been described herein with reference to preferred embodiments thereof. While the present invention has been shown and described with particular examples, it should be understood that various changes and modification may be made to the particular examples without departing from the scope of the broad spirit as defined in the claims.

INDUSTRIAL APPLICABILITY

The present invention is applicable to a relay station, a base station, a relay method and a communication method in a wireless communication network.

**Claims**

1. A relay station comprising:

   an extracting unit configured to descramble radio signals transmitted from a plurality of mobile stations and extract identification information of physical layers of the mobile stations; and
   a multiplexing unit configured to convert the identification information of the physical layers to identification information of MAC layers, which are data link layers, and form a protocol data unit which includes the identification information of the MAC layers in a header and includes service data units of the radio signals transmitted from the mobile stations.

2. The relay station as claimed in claim 1, wherein the extracting unit extracts the identification information of the physical layers based on a scramble sequence for each of the mobile stations.

3. The relay station as claimed in claim 2, wherein the multiplexing unit inserts the identification information of the MAC layers using MAC control elements, which are physical layer control information and inserted in the MAC layers, and C-RNTIs, which are identifiers for identifying the mobile stations.

4. The relay station as claimed in one of claims 2 and 3, further comprising a scrambling unit configured to scramble the protocol data unit using a scramble sequence of the relay station, which scramble sequence is different from the scramble sequences of the mobile stations.

5. The relay station as claimed in one of claims 1 to 4, further comprising a setting unit configured to transmit to a base station a radio signal indicating that the relay station is a relay station after a connection is established with the base station and acquire a scramble sequence for the relay station from the base station.

6. A base station for receiving radio signal of a plurality of mobile stations, the radio signal being relayed by the relay station of claim 1, the base station comprising:

   a descrambling unit configured to recognize relay station identification information in a physical layer of the radio signal; and

7. A relay station including a separating unit configured to convert, to identification information of physical layers of a plurality of mobile stations, identification information of MAC layers included in radio signal transmitted from a base station, which radio signal includes the identification information of the MAC layers, which are data link layers, in a header thereof and includes service data units of radio signals to the mobile stations, and separate a service data unit corresponding to each of the mobile stations.

8. The relay station as claimed in claim 7, further comprising a scrambling unit configured to perform scrambling based on the identification information of the physical layers of the mobile stations, using a scramble sequence for each of the mobile stations.

9. The relay station as claimed in claim 8, wherein in the radio signal, the identification information of the MAC layers is inserted using MAC control elements, which are physical layer control information inserted in the MAC layers, and C-RNTIs, which are identifiers for identifying the mobile stations.

10. A relay method for relaying radio signals transmitted from a plurality of mobile stations to a base station, the relay method comprising:

    extracting identification information of physical layers of the mobile stations from the radio signals;
    converting the identification information of the physical layers to identification information of MAC layers, which are data link layers; and
    forming a protocol data unit which includes the identification information of the MAC layers in a header and includes service data units of the radio signals transmitted from the mobile stations.

11. The relay method as claimed in claim 10, wherein the identification information of the physical layers is extracted based on a scramble sequence for each of the mobile stations.

12. The relay method as claimed in claim 11, wherein the identification information of the MAC layers is inserted using MAC control elements, which are physical layer control information inserted in the MAC layers, and C-RNTIs, which are identifiers for identifying the mobile stations.

13. The relay method as claimed in one of claims 11 and 12, further comprising transmitting to the base station, the protocol data unit using a scramble sequence different from the scramble sequences of the mobile stations.

14. The relay method as claimed in one of claims 10 to 13, further comprising transmitting to the base station, radio signal indicating that a relay station relays the radio signals, after a connection is established with the base station, and acquiring a scramble sequence for the relay station from the base station.

15. A receiving method for receiving radio signals transmitted from a plurality of mobile stations and relayed using the relay method of claim 10, the receiving method comprising:

   recognizing relay station identification information in physical layers of the radio signals; and
   extracting from the physical layers, the radio signals transmitted from the mobile stations.

16. A relay method for relaying a radio signal transmitted from a base station to a plurality of mobile stations, the radio signal including identification information of MAC layers, which are data link layers of the mobile stations, in a header thereof and including service data units of radio signals transmitted from the mobile stations, the relay method comprising:

   converting the identification information of the MAC layers to identification information of physical layers; and
   transmitting to each of the mobile stations, radio signal in which identification information of a physical layer for the mobile station is added to a service data unit corresponding to the mobile station.

17. The relay method as claimed in claim 16, wherein the identification information of the physical layers is scramble sequences, each for a different one of the mobile stations.

18. The relay method as claimed in claim 17, wherein in the radio signal, the identification information of the MAC layers is inserted using MAC control elements, which are physical layer control information inserted in the MAC layers, and C-RNTIs, which are identifiers for identifying the mobile stations.

# FIG.1

EP 2 416 618 A1

# FIG.2

200

21

SCRAMBLE S (RELAY)

SCRAMBLE 1 (UE 1)

UE 1

BS

23

SCRAMBLE 2 (UE 2)

231   21   22

RS

22

UE 2

# FIG.3

PHY LAYER — 311

SCRAMBLING SPECIFIC TO UE1

312

SCRAMBLING SPECIFIC TO UE2

EXTRACTING PHY_ID — A1

EXTRACTING PHY_ID — A2

MAC LAYER

UE 1 — 321

UE 2 — 322

+

PHY_ID OF UE1 ～ 331

+

PHY_ID OF UE2 ～ 332

MAC HEADER

MAC_SDU

EP 2 416 618 A1

# FIG.4

MAC LAYER

UE 1
321

UE 2
322

+

+

PHY_ID OF UE1 ～331

PHY_ID OF UE2 ～332

| PHY_ID → UE_ID CONVERSION | ～B |

| MAC_PDU GENERATION | ～C |

41

UE 1        UE 2

411    321    412    322

UE_ID

MAC HEADER

MAC_SDU

# FIG.5

50

UE 1  UE 2  UE 1  UE 2  UE 1  UE 2  UE 1          UE 2

511  512  521  522  531  532        541          542

← MAC HEADER →

| | |
|---|---|
| (dotted) | INSERTION COMMAND OF C-RNTI BY MAC-CE |
| (crosshatch) | FORMAT COMMAND OF MAC_SDU |
| (speckled) | C-RNTI MESSAGE |
| (light dots) | MAC_SDU MESSAGE |

EP 2 416 618 A1

# FIG.6

**BS**

601 L2 BUFFER (UE 1) ← PLURAL UEs ← UPPER LAYER

602 DL SCHEDULER CONTROL SIGNAL GENERATING UNIT

603 MAC PDU GENERATING UNIT

604 CODING UNIT

605 RELAY PHY ID SCRAMBLING UNIT

606 MODULATING UNIT

607 MULTIPLEX-ING UNIT

608 RF TRANS-MITTING UNIT

609 DUP

610 (antenna)

611 RF RECEIVING UNIT

612 DEMODULAT-ING UNIT

613 RELAY PHY ID DE-SCRAMBLING UNIT

614 DECODING UNIT

615 MAC SDU EXTRACTING UNIT

616 L2 BUFFER (UE 1) → UPPER LAYER / PLURAL UEs

617 UL SCHEDULER CONTROL SIGNAL GENERATING UNIT

FIG.7

EP 2 416 618 A1

# FIG.8

UE

EP 2 416 618 A1

# FIG.9

# FIG.10

PHY ID

ID CONVERSION → UE_ID

1001

CONVERSION TABLE

1002

MAC_PDU

UE 1

UE 2

UE n

1003

MAC_PDU GENERATING UNIT → TO CODING UNIT

EP 2 416 618 A1

# FIG.11

BASE STATION BS                                    RELAY STATION RS

RACH PREAMBLE                    1101

RACH RESPONSE                    1102

RRC SETUP REQUEST                1103

CONTENTION CHECK                 1104

RRC SETUP COMPLETE               1105

RELAY SPECIFICATION NOTICE       1106

RELAY SPECIFICATION RESPONSE     1107

RELAY SETUP NOTICE               1108

# FIG.12

RELAY
RESPONSE
TRANSMITTING
UNIT
1207

UPPER LAYER
TRANSMITTING
UNIT
1208

PHY
1209

BS

DUP
1202

1201

RELAY INITIAL
SETTING UNIT
1206

RELAY
SPECIFICATION
RECEIVING UNIT
1205

UPPER LAYER
RECEIVING UNIT
1204

PHY
1203

EP 2 416 618 A1

# FIG.13

EP 2 416 618 A1

# FIG.14

```
    ┌──────────┐      ┌──────────┐              ┌──────────┐
    │ L2 BUFFER│ 1401 │ L2 BUFFER│ 1401         │ L2 BUFFER│ 1401
    │  OF UE1  │      │  OF UE2  │   • • •       │  OF UEn  │
    └────┬─────┘      └────┬─────┘              └────┬─────┘
         │                 │                    1402 │
    ┌────▼─────────────────▼─────────────────────────▼────┐
    │              GENERATING MAC_PDU                      │
    └────────────────────────┬────────────────────────────┘
                             │                        1403
    ┌────────────────────────▼────────────────────────────┐
    │                  GENERATING PHY                      │
    └────────────────────────┬────────────────────────────┘
 BASE                        │                        1404
STATION ┌───────────────────▼────────────────────────────┐
  BS    │         TRANSMITTING FROM BASE STATION          │
        └────────────────────┬────────────────────────────┘
- - - - - - - - - - - - - - -│- - - - - - - - - - - - - - -
                             │                        1405
    ┌────────────────────────▼────────────────────────────┐
    │            RECEIVING AT RELAY STATION                │
    └────────────────────────┬────────────────────────────┘
                             │                        1406
    ┌────────────────────────▼────────────────────────────┐
    │          DEMODULATING AND DECODING PHY               │
    └────────────────────────┬────────────────────────────┘
                             │                        1407
    ┌────────────────────────▼────────────────────────────┐
    │   SEPARATING MAC_SDU WITH RESPECT TO EACH UE         │
    └──┬──────────────────┬──────────────────────────┬─────┘
       │ 1408             │ 1408                      │ 1408
  ┌────▼─────┐       ┌────▼─────┐              ┌──────▼────┐
  │GENERATING│       │GENERATING│              │GENERATING │
  │   PHY    │       │   PHY    │              │   PHY     │
  └────┬─────┘ 1409  └────┬─────┘ 1409         └────┬──────┘ 1409
  ┌────▼─────┐       ┌────▼─────┐              ┌──────▼────┐
 RELAY│TRANSMITTING│ │TRANSMITTING│           │TRANSMITTING│
STATION│  FROM    │  │  FROM    │              │  FROM     │
  RS  │RELAY STATION│ │RELAY STATION│          │RELAY STATION│
  └────┬─────┘       └────┬─────┘              └──────┬────┘
- - - -│- - - - - - - - - │- - - - - - - - - - - - - -│- - - -
       │ 1410             │ 1410                      │ 1410
  ┌────▼─────┐       ┌────▼─────┐              ┌──────▼────┐
  │RECEIVING │       │RECEIVING │              │RECEIVING  │
  │  AT UE   │       │  AT UE   │              │  AT UE    │
  └────┬─────┘ 1411  └────┬─────┘ 1411         └────┬──────┘ 1411
  ┌────▼─────┐       ┌────▼─────┐              ┌──────▼────┐
  │DEMODULATING│     │DEMODULATING│            │DEMODULATING│
  │   AND    │       │   AND    │              │   AND     │
  │DECODING PHY│     │DECODING PHY│            │DECODING PHY│
  └────┬─────┘ 1412  └────┬─────┘ 1412         └────┬──────┘ 1412
  ┌────▼─────┐       ┌────▼─────┐              ┌──────▼────┐
  │EXTRACTING│       │EXTRACTING│              │EXTRACTING │
  │ MAC_SDU  │       │ MAC_SDU  │              │ MAC_SDU   │
  └────┬─────┘ 1413  └────┬─────┘ 1413         └────┬──────┘ 1413
MOBILE ┌───▼──────┐  ┌────▼─────┐              ┌──────▼────┐
STATION│ L2 BUFFER│  │ L2 BUFFER│   • • •      │ L2 BUFFER │
  UE   │  OF UE1  │  │  OF UE2  │              │  OF UEn   │
       └──────────┘  └──────────┘              └───────────┘
```

# FIG.15

**MOBILE STATION UE**

| L2 BUFFER OF UE1 ~1501 | L2 BUFFER OF UE2 ~1501 | • • • | L2 BUFFER OF UEn ~1501 |
|---|---|---|---|
| GENERATING MAC_PDU ~1502 | GENERATING MAC_PDU ~1502 | | GENERATING MAC_PDU ~1502 |
| GENERATING PHY ~1503 | GENERATING PHY ~1503 | | GENERATING PHY ~1503 |
| TRANSMITTING FROM UE ~1504 | TRANSMITTING FROM UE ~1504 | | TRANSMITTING FROM UE ~1504 |

- - - - - - - - - - - - - - - - - - - - - - - - - - - - - - - - - - - - -

**RELAY STATION RS**

| RECEIVING AT RELAY STATION ~1505 | RECEIVING AT RELAY STATION ~1505 | RECEIVING AT RELAY STATION ~1505 |
|---|---|---|
| DEMODULATING AND DECODING PHY ~1506 | DEMODULATING AND DECODING PHY ~1506 | DEMODULATING AND DECODING PHY ~1506 |

GENERATING MAC_PDU BY MULTIPLEXING UEs ~1507

GENERATING PHY ~1508

TRANSMITTING FROM RELAY STATION ~1509

- - - - - - - - - - - - - - - - - - - - - - - - - - - - - - - - - - - - -

**BASE STATION BS**

RECEIVING AT BASE STATION ~1510

DEMODULATING AND DECODING PHY ~1511

EXTRACTING MAC_SDU WITH RESPECT TO EACH US ~1512

| L2 BUFFER OF UE1 ~1513 | L2 BUFFER OF UE2 ~1513 | • • • | L2 BUFFER OF UEn ~1513 |
|---|---|---|---|

## FIG.16

```
┌─────────────────────────────────────────────────────┐  ～1601
│          DEMODULATING AND DECODING PHY               │
└─────────────────────────────────────────────────────┘
                          │
                          ▼
┌─────────────────────────────────────────────────────┐  ～1602
│              ANALYZING MAC HEADER                    │
└─────────────────────────────────────────────────────┘
                          │
                          ▼
┌─────────────────────────────────────────────────────┐  ～1603
│           COUNTING NUMBER OF UE_IDS                  │
└─────────────────────────────────────────────────────┘
                          │
                          ▼
┌─────────────────────────────────────────────────────┐  ～1604
│        DETERMINING NUMBER OF UEs MULTIPLEXED         │
└─────────────────────────────────────────────────────┘
```

UE 1 ～1605

- EXTRACTING MAC_PDU ～1605A
- EXTRACTING UE_ID ～1605B
- CONVERTING FROM UE_ID TO PHY_ID ～1605C

UE 2 ～1605

UE n ～1605

GENERATING PHY ～1606

GENERATING PHY ～1606

GENERATING PHY ～1606

EP 2 416 618 A1

# FIG.17

1701

UE n

1701

UE 2

1701

UE 1

1701A
DEMODULATING AND DECODING PHY

1701B
EXTRACTING MAC_SDU

1701C
EXTRACTING PHY_ID

1701D
CONVERTING FROM PHY_ID TO UE_ID

1702
GENERATING MAC_PDU

1703
GENERATING PHY

# FIG.18

1800

SCD

1801

| eNB – RELAY STATION SCD |
| --- |

↓

1802

| RELAY STATION – UE SCD |
| --- |

←→ | RELAY STATION – UE1 SCD |

1803

| SCD CONTROL SIGNAL GENERATING UNIT |
| --- |

↓

# FIG.19

BASE STATION BS   RELAY STATION RS   MOBILE STATION UE
UE 1   UE 2   UE 3

100 Mbps

$\alpha$ Mbps

$\beta$ Mbps

$\gamma$ Mbps

EP 2 416 618 A1

## FIG.20

BASE STATION
BS

RELAY STATION
RS

MOBILE STATION
UE

| UPPER LAYER |
| MAC |
| PHY |

| MAC | MAC |
| PHY | PHY |

| UPPER LAYER |
| MAC |
| PHY |

## FIG.21

BASE STATION
BS

RELAY STATION
RS

MOBILE STATION
UE

| UPPER LAYER |
| MAC |
| PHY |

| MAC | MAC |
| PHY | PHY |

| UPPER LAYER |
| MAC |
| PHY |

FIG.22

<table>
<tr><td colspan="2"><b>INTERNATIONAL SEARCH REPORT</b></td><td colspan="2">International application No.<br>PCT/JP2009/056676</td></tr>
</table>

| A. CLASSIFICATION OF SUBJECT MATTER |
|---|
| *H04W88/00*(2009.01)i, *H04B7/15*(2006.01)i |

According to International Patent Classification (IPC) or to both national classification and IPC

| B. FIELDS SEARCHED |
|---|
| Minimum documentation searched (classification system followed by classification symbols)<br>H04W88/00, H04B7/15 |

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2005-501494 A (Nokia Corp.),<br>13 January, 2005 (13.01.05),<br>Par. Nos. [0025], [0033] to [0038], [0049],<br>[0055] to [0062], [0088] to [0093]; Figs. 6, 10,<br>11<br>& US 2005/0063347 A1     & EP 1419667 A<br>& WO 2003/019960 A1     & BR 117120 A<br>& CA 2456266 A           & CN 1557105 A | 1-18 |
| Y | WO 2007/053840 A2 (QUALCOMM INC.),<br>10 May, 2007 (10.05.07),<br>Par. Nos. [0077] to [0080], [0083]<br>& JP 2009-514485 A      & US 2007/0177569 A1<br>& US 2008/0056229 A1    & EP 1943764 A<br>& CA 2627613 A           & KR 10-2008-0070734 A<br>& CN 101351981 A | 1-18 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 April, 2009 (17.04.09) | Date of mailing of the international search report<br>28 April, 2009 (28.04.09) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008099283 A
- JP 2008104096 A